# EUROPÄISCHE PATENTSCHRIFT

(11) **EP 2 072 961 B1**
(45) Veröffentlichungstag und Bekanntmachung des Hinweises auf die Patenterteilung: **15.05.2013**
(21) Anmeldenummer: 08105989.1
(22) Anmeldetag: 16.12.2008
(51) Int. Cl.: G01D 5/20

(54) **Sensor**
Sensor
Capteur

(30) Priorität: 21.12.2007 DE 102007062911
(43) Veröffentlichungstag der Anmeldung: 24.06.2009
(73) Patentinhaber: SICK AG, 79183 Waldkirch (DE)
(72) Erfinder: Baak, Josef, 79183, Waldkirch (DE)
(74) Vertreter: Ludewigt, Christoph

(56) Entgegenhaltungen:
- DE-A1- 10 013 525
- DE-A1-102004 013 423
- DE-A1-102005 015 948

## Beschreibung

Die Erfindung betrifft einen magnetischen oder induktiven Sensor zur Erfassung einer Kolbenposition gemäß dem Oberbegriff des Anspruchs 1, sowie die Verwendung eines solchen Sensors.

Induktive Sensoren werden häufig an einem Gehäuse eines Arbeitszylinders angeordnet und haben sich zur genauen Positionsbestimmung durch berührungsloses Erfassen der Stellung von z. B. Pneumatik- oder Hydraulikkolben innerhalb des Arbeitszylinders bewährt. Ein solcher Sensor ist beispielsweise aus der DE 10 2006 008 157 A1 bekannt. Dieser bekannte Sensor kann zwei bestimmte Kolbenpositionen erfassen. Einfachere Sensoren erfassen jeweils nur eine Kolbenposition.

Die elektrische Versorgung des Sensors sowie die Übertragung des Schaltsignals erfolgt über eine elektrische Leitung. Die Verlegung der Anschlussleitungen ist sehr material- und zeitaufwändig, da die Sensoren typischerweise in der Industrieautomation eingesetzt werden und in einer einzigen Maschine bereits eine Vielzahl solcher Sensoren eingesetzt werden müssen. Kabelbäume mit 20 bis 30 Leitungen kommen häufig vor. Die Leitungen werden dann über Schleppketten an den beweglichen Teilen geführt. Leitungsbrüche sind die häufigste Ausfallursache bei diesen Sensoren (ca. 80% der Ausfälle). Auch die Anbindung zwischen Sensorgehäuse und Anschlusskabel stellt im Bezug zur Dichtheit ebenfalls einen Schwachpunkt dar.

Es gibt von einigen Herstellern Pilotanlagen, in denen drahtlose Sensoren betrieben werden. So bietet ABB drahtlose Sensoren an, deren Energieversorgung über riesige Leiterschleifen induktiv eingekoppelt wird, wobei die Leiterschleifen die gesamte Roboterzelle umspannen. Derartige Leiterschleifen sind sehr platz-, montage- und kostenaufwändig und die eingestrahlte Energie ist sehr hoch.

Aus der DE 43 42 069 ist ein Positionsdetektor bekannt, dessen Detektoreinheiten gleichzeitig als Energiespeichereinheiten dienen. In einem Ausführungsbeispiel dieses Dokuments ist ein Positionsgeber zur Überwachung einer Linearverschiebung offenbart, bei dem der sich linear bewegende Körper eine Vielzahl von in regelmäßigen Abständen angeordneten Permanentmagneten aufweist, die zueinander antiparallel angeordnet sind und die zwei drehbar angeordnete Permanentmagnete beeinflussen, die wiederum über Spulenkerne Induktionsspulen beeinflussen. Die beiden Permanentmagnete und zugehörige Spulen mit Spulenkernen müssen in einem speziellen Abstand zueinander, der von dem Abstand der regelmäßig angeordneten Permanentmagnete des bewegten Körpers abhängt, angeordnet sein. Ein solcher Sensor ist allerdings nicht geeignet an einem Arbeitszylinder angeordnet zu werden und von außen die Kolbenposition zu erfassen.

Aus der DE 100 13 525 A2 ist ein Positionssensor bekannt, der eine eigene Energieversorgungseinheit zur Energieversorgung einer Auswerteeinheit aufweist. Die Energieversorgungseinheit besteht aus zwei Kondensatoren, die über eine Antennenspule über Hochfrequenzeinkopplung aufladbar sind. Die Antennenspule dient gleichzeitig zum drahtlosen Senden von Positionssignalen an eine übergeordnete Steuerung.

Aus der DE 10 2005 015 948 A1 ist eine Sensoreinrichtung zur Erfassung einer Kolbenposition bekannt, bei der in einer Ausführungsform eine Energieversorgungseinrichtung darin besteht, dass die kinetische Energie bewegbarer Teile, also beispielsweise von Aktorgliedern, zur Energiegewinnung genutzt wird. Dazu kann der am Kolben angeordnete Permanentmagnet beim Passieren einer entlang des Kolbenhubs angeordneten Spule in dieser Spule Energie erzeugen, die als Versorgungsenergie eingesetzt werden kann.

Davon ausgehend ist es Aufgabe der Erfindung einen verbesserten magnetischen oder induktiven Sensor zur Erfassung einer Kolbenposition von außerhalb eines Arbeitszylinders bereitzustellen, der kabellos arbeiten kann und dabei einfach, kompakt und kostengünstig aufgebaut ist.

Diese Aufgabe wird gelöst durch einen Sensor mit den Merkmalen des Anspruchs 1.

Der erfindungsgemäße Sensor weist eine elektronische Auswerteeinheit auf, wobei ein Kolben des Arbeitszylinders einen als Dauermagneten ausgebildeten Kolbenmagneten trägt, dessen Position von der Auswerteeinheit erfassbar ist und wobei die Auswerteeinheit ein die Kolbenposition repräsentierendes Signal abgeben kann. Zur Energieversorgung der Auswerteeinheit ist erfindungsgemäß eine Energieversorgungseinheit vorgesehen, die wenigstens eine Spule und wenigstens einen in Wirkverbindung mit der Spule linear verschiebbaren und als Dauermagneten ausgebildeten Energiewandlermagneten aufweist und wobei das Signal drahtlos von dem Sensor an eine übergeordnete Steuerung oder an andere Sensoren übertragbar ist.

Bei einer Bewegung des Kolbens wird über den Kolbenmagneten und durch die magnetische Kopplung eine Kraft auf den Energiewandlermagneten ausgeübt und dieser innerhalb der Spule verschoben. Bei Verschiebung des als Dauermagneten ausgebildeten Energiewandlermagneten innerhalb der Spule wird aufgrund der damit einhergehenden magnetischen Flussänderung dφ/dt eine Spannung U in der Spule induziert. Die so erzeugte Spannung kann genutzt werden, um den Sensor mit Energie zu versorgen und zu betreiben, das heißt die Kolbenposition zu erfassen und ein die Kolbenposition repräsentierendes Signal an einen Empfänger einer übergeordneten Steuerung zu übertragen.

Aufgrund der sensoreigenen, autarken Energieversorgung ist für den Betrieb des Sensors weder eine Batterie noch eine Anschlussleitung notwendig. Das reduziert nicht nur den Montage- und Installationsaufwand erheblich, sondern es sind weder Schleppketten noch Kabelkanäle erforderlich. Durch den somit möglichen Verzicht auf sämtliche Kabel für den erfindungsgemäßen Sensor wird die Verfügbarkeit der Anlage, in der die Sensoren eingesetzt werden, erheblich erhöht und Stillstandszeiten der Anlage reduziert, da ein Ausfall durch Leitungsbrüche nicht mehr auftreten kann. Daneben sind neue Anwendungen mit frei bewegbaren, also ungebundenen Magnetsensoren möglich.

Des Weiteren ist eine völlige Kapselung des Sensors möglich, was insbesondere in Anlagen für die Lebensmittelindustrie, bei der aggressive Reinigungsmittel eingesetzt werden, oder auch in Anwendungen mit Explosionsschutzbedingungen, vorteilhaft ist.

Einen weiteren Vorteil stellt der mit der Kabelfreiheit einhergehende einfache Austausch von Sensoren dar.

Die erzeugte Energie ist abhängig von der magnetischen Flussänderung, also der Geschwindigkeit mit der der Energiewandlermagnet bewegt wird. Da in realen Anwendungen die Kolben in den Arbeitszylindern zumeist sehr schnell bewegt werden, wird ausreichend Energie erzeugt. Da die Energieversorgungseinheit mit der Spule und dem Energiewandlermagneten ausreichend klein ausgestaltet werden kann und die Verschiebung auch lediglich in Längsrichtung der Spule erfolgen kann und der Energiewandlermagnet innerhalb der Spule vorgesehen sein kann, kann insgesamt der erfindungsgemäße Sensor sehr kompakt, klein und kostengünstig ausgeführt werden. Das eröffnet die Möglichkeit, den erfindungsgemäßen Sensor in bekannter Weise (wie beispielsweise in DE 196 43 413 A1 oder DE 196 53 222 A1 beschrieben) in vorhandene Befestigungsnuten an einem Arbeitszylinder zu platzieren.

Es ist auch denkbar, in der Energieversorgungseinheit mehrere Spulen zu verwenden, wobei jeder Spule ein Energiewandlermagnet zugeordnet ist, so dass in jeder Spule eine Spannung erzeugt wird und insgesamt die Energieausbeute damit erhöht wird.

In einer ersten Ausführungsform der Erfindung liegt die Polrichtung des Kolbenmagneten in Längsrichtung des Hubweges und liegt antiparallel zur Polrichtung des Energiewandlermagneten. In diesem Fall wird der Energiewandlermagnet durch den Kolbenmagneten mitgenommen, so dass diese Ausgestaltung dann günstig ist, wenn der Kolben und damit der Energiewandlermagnet schnell genug bewegt wird, um letztendlich eine ausreichende Flussänderung und Spannungsinduktion zu erhalten.

Wenn eine schnellere Änderung des magnetischen Flusses (größeres dφ/dt), also eine schnellere Bewegung des Energiewandlermagneten, gewünscht ist, kann eine schlagartige Bewegung des Energiewandlermagneten dadurch erreicht werden, dass die Polrichtung des Energiewandlermagneten parallel zur Polrichtung des Kolbenmagneten ausgerichtet wird. Dann stoßen sich nämlich die beiden Magneten ab, wenn sie direkt übereinander liegen, so dass aufgrund der Abstoßung eine schlagartige Bewegung des Energiewandlermagneten erfolgt, wenn der Punkt des direkten Übereinanderliegens (maximale Abstoßung) bei der Kolbenbewegung überfahren wird.

In Weiterbildung der Erfindung kann die Energieausbeute gegebenenfalls erhöht werden, wenn mehrere, insbesondere drei, Energiewandlermagnete innerhalb der Spule vorgesehen sind. Wenn dann die Polrichtungen jeweils benachbarter Energiewandlermagnete antiparallel sind, kann bei Vorbeifahren des Kolbenmagneten eine Schwingungsbewegung von wenigstens einem der Energiewandlermagneten angestoßen werden, die zur entsprechenden Spannungsinduktion führt.

Wenn die Spule als Printspule auf einer Leiterplatte ausgebildet ist und der Energiewandlermagnet innerhalb oder zwischen zwei Lagen der Leiterplatte vorgesehen ist, kann der Sensor kostengünstig hergestellt werden und eine kompaktere Bauform erhalten.

In Weiterbildung der Erfindung kann die Spannungsinduktion durch den Energiewandlermagneten auch als Auslöser für das Positionssignal genutzt werden.

Vorteilhafterweise ist eine Energiespeichereinheit vorgesehen zur Zwischenspeicherung der von der Energieversorgungseinheit erzeugten Energie. Damit steht zu Zeitpunkten Energie zur Verfügung, in denen die Energieversorgungseinheit selbst keine Energie erzeugt, so dass einzelne Energie- bzw. Spannungsimpulse zwischengespeichert werden können, um einen kontinuierlichen Betrieb der Auswerteeinheit über einen zum Senden der Signale notwendigen Zeitraum zu gewährleisten.

Wenn der Sensor ein hermetisch dichtes Gehäuse aufweist, ist er mit besonderem Vorteil in Arbeitsbereichen einsetzbar, in denen aggressive oder gefährliche Medien zur Anwendung gelangen, beispielsweise im Lebensmittelbereich, wo zu Reinigungszwecken aggressive Reinigungsmittel verwendet werden oder in Applikationen, in denen explosive Medien eingesetzt werden.

Mit besonderem Vorteil ist der erfindungsgemäße Sensor zur Kolbenlagenbestimmung an einem Pneumatik- oder Hydraulikzylinder einsetzbar. Dabei könnte der Sensor vollständig, mit Ausnahme einer Antenne, in den Pneumatik- oder Hydraulikzylinder integriert sein, da er kabellos arbeitet und keinerlei Energieversorgung benötigt. Dadurch ist die Handhabung und Reinigung eines solchen Zylinders erheblich erleichtert.

Im Folgenden wird die Erfindung anhand eines Ausführungsbeispiels unter Bezugnahme auf die Zeichnung im Einzelnen erläutert. In der Zeichnung zeigen:
- Fig. 1: eine schematische Darstellung eines erfindungsgemäßen Sensors an einem Arbeitszylinder;
- Fig. 2: eine schematische Darstellung eines Teils einer Energieversorgungseinheit des erfindungsgemäßen Sensors an einem Arbeitszylinder;
- Fig. 3: ein Diagramm zur Verdeutlichung der Spannungsinduktion;
- Fig. 4 und 5: schematische Darstellungen weiterer Ausführungsformen;
- Fig. 6a und b: eine schematische Darstellung einer Spule mit Energiewandlermagneten einer weiteren Ausführungsform im Schnitt und in der Draufsicht.

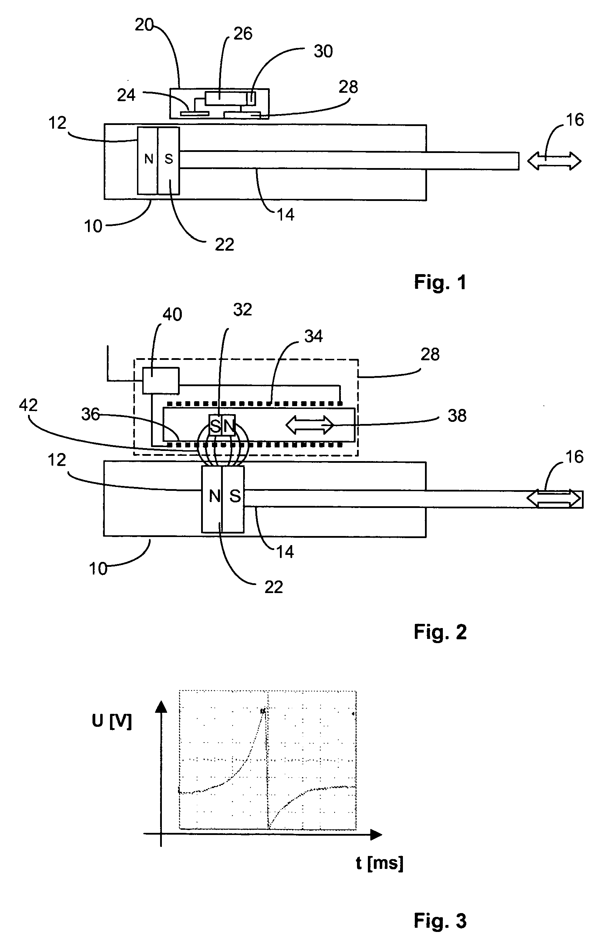

Ein in Fig. 1 dargestellter Arbeitszylinder 10, der ein Pneumatikzylinder eines nicht dargestellten Industrieroboters sein kann, enthält einen Kolben 12, der mittels einer Kolbenstange 14 in dem Arbeitszylinder 10 in Längsrichtung des Zylinders (Pfeil 16) innerhalb seiner beiden Endstellungen bewegbar ist. Die Kolbenposition ist mittels eines magnetischen Sensors 20 ermittelbar, wobei der Kolben 12 einen als Dauermagneten ausgebildeten Kolbenmagneten 22 trägt, dessen Position der Sensor 20 erfassen kann. Ein derartiger Sensor 20 ist beispielsweise beschrieben in der DE 10 2004 046 107 A1.

Der Sensor 20 ist in der Zeichnung (Fig. 1) nur schematisch dargestellt und enthält wenigstens ein magnetisches Sensorelement 24, das auf das Magnetfeld des Kolbenmagneten 22 reagiert, eine Auswerteeinheit 26, die bevorzugt in einem Mikrocontroller realisiert ist und in der die Signale des Sensorelementes 24 weiterverarbeitet werden, sowie gegebenenfalls notwendige Speicher. Der Sensor 20 ist an dem Arbeitszylinder 10 derart positioniert, dass er die gewünschte Kolbenposition über das Sensorelement 24 erfassen kann oder er ist dazu ausgebildet, elektronisch auf bestimmte Kolbenpositionen eingestellt werden zu können. Häufig müssen nur die Kolbenendpositionen erfasst werden.

Erfindungsgemäß weist der Sensor 20 eine Energieversorgungseinheit 28 auf, die dazu geeignet ist, den Sensor 20 mit elektrischer Energie zu versorgen und die weiter unten näher erläutert wird. Des Weiteren weist der Sensor 20 eine Übertragungseinheit 30 auf, mittels derer Signale des Sensors 20, die unter anderem die Kolbenposition anzeigen, an eine übergeordnete Steuerung oder an andere Sensoren drahtlos übertragbar sind.

In Fig. 2 sind neben dem Arbeitszylinder 10 die wesentlichen Elemente der Energieversorgungseinheit 28 schematisch dargestellt. In diesem ersten Ausführungsbeispiel weist die Energieversorgungseinheit 28 einen als Dauermagneten ausgebildeten Energiewandlermagneten 32 auf, der in einer Spule 34 verschiebbar gelagert ist. Die Lagerung kann beispielsweise aus einer an ihren Enden mit Anschlägen versehenen Führung 36 bestehen, vorzugsweise eine Führung mit minimalem Reibkoeffizienten, beispielsweise ein einfaches Röhrchen, um das die Spule 34 gewickelt ist und in der der Energiewandlermagnet 32 frei beweglich ist und sich somit in Richtung 38 linear in Spulenlängsrichtung bewegen kann.

Bei Bewegung des Kolbens 12 wird der Kolbenmagnet 22 an der in Bezug zum Arbeitszylinder feststehenden Spule 34 vorbeigeführt und übt aufgrund der magnetischen Kopplung auf den Energiewandlermagneten 32 Kräfte aus, so dass dieser innerhalb der Spule 34 in Richtung des Doppelpfeiles 38 bewegt wird, wie dies im Einzelnen weiter unten näher erläutert wird. Durch die Bewegung des Energiewandlermagneten 32 in der Spule 34 erfolgt eine Änderung des magnetischen Flusses φ und damit einer der Flussänderung dφ/dt entsprechenden Induktion einer Spannung U in der Spule 34. Dies ist schematisch in Fig. 3 dargestellt. Diese Spannung wird einer Energieversorgungselektronik 40 zugeführt und dort entsprechend verarbeitet und/oder gespeichert, um letztendlich den Sensor 20 mit elektrischer Energie versorgen zu können.

In dem ersten Ausführungsbeispiel liegt die magnetische Ausrichtung des Kolbenmagneten 22 in Richtung des Hubweges, also in Richtung des Pfeils 16 und die magnetische Ausrichtung des Energiewandlermagneten 32 ist dazu antiparallel. In dieser Konstellation besteht zwischen den beiden Magneten eine Anziehungskraft bei Annäherung des Kolbenmagneten 22 an den Energiewandlermagneten 32, die am größten ist, wenn die Magnete sich auf gleicher Höhe befinden, wie in Fig. 2 auch anhand der Feldlinien 42 dargestellt. Der Energiewandlermagnet 32 wird dann vom Kolbenmagneten 22 mitgenommen, bis er an ein Ende seines möglichen Verschiebeweges gelangt. Die Flussänderung in der Spule 34 ist damit im Wesentlichen abhängig von der Geschwindigkeit des Kolbenmagneten 22.

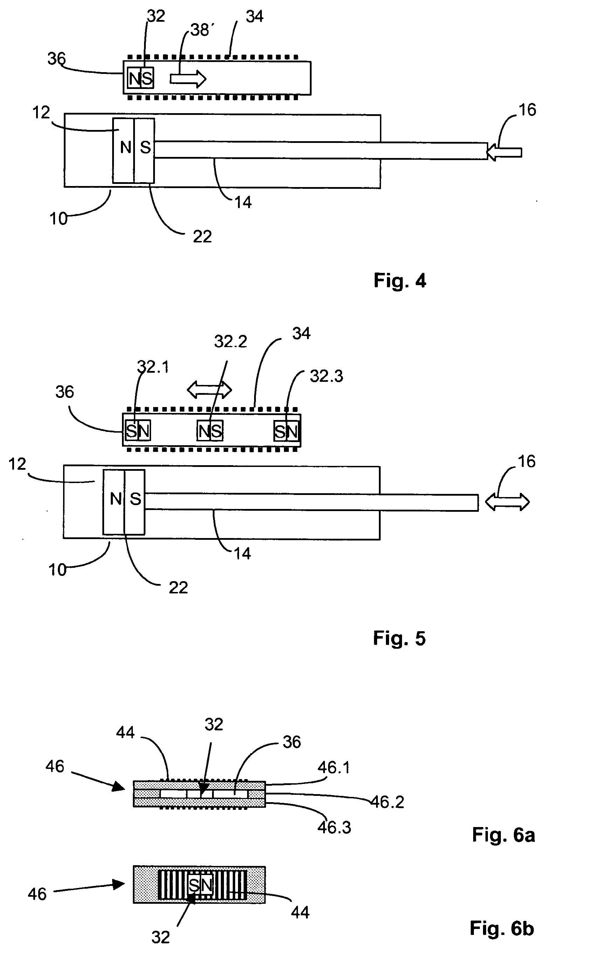

In einem zweiten, in Fig. 4 dargestellten Ausführungsbeispiel ist die Polrichtung des Energiewandlermagneten 32 umgekehrt wie in dem vorangehenden Ausführungsbeispiel nach Fig. 2, also nun parallel zur Polrichtung des Kolbenmagneten 22. Wird der Kolbenmagnet 22 jetzt beispielsweise von rechts nach links bewegt, wird zunächst der Nordpol des Kolbenmagneten 22 den Südpol des Energiewandlermagneten 32 anziehen. Allerdings wird sich der Kolbenmagnet 22 nur so weit nähern, dass er auf jeden Fall nicht auf gleicher Höhe mit dem Kolbenmagneten 22 gelangt, denn dies ist eine Position maximaler Abstoßung der Magneten, denn dann kämen gleichnamige Pole übereinander zu liegen. Deshalb wird bei Bewegung des Kolbenmagneten 22 nach links zunächst der Energiewandlermagnet 32 quasi vor dem Kolbenmagneten 22 vorhergeschoben und zwar so weit, bis der Energiewandlermagnet 32 an das linke Ende seines Verschiebeweges (linker Anschlag der Führung 36) anstößt. Bei weiterer Bewegung des Kolbens 12 nach links wird dieser Punkt maximaler Abstoßung überfahren, so dass sich dann aufgrund der Abstoßung der Energiewandlermagnet 22 schlagartig nach rechts in Pfeilrichtung 38' bewegt. Aufgrund der schlagartigen Bewegung erfolgt eine große Flussänderung dφ/dt und damit entsprechend eine große Induktionsspannung U. Dieser Zeitpunkt der Bewegung, wenn der Punkt maximaler Abstoßung gerade überfahren wird, ist in Fig. 4 dargestellt. Ein analoger Ablauf gilt selbstverständlich bei Bewegung des Kolbens von links nach rechts.

In dem in Fig. 5 dargestellten dritten Ausführungsbeispiel sind in der Führung 36 in der Spule 34 drei Energiewandlermagnete 32.1, 32.2 und 32.3 linear frei beweglich gelagert. Jeweils benachbarte Energiewandlermagnete sind antiparallel ausgerichtet, so dass sich jeweils gleichnamige Pole gegenüberliegen. Damit stoßen sich die Energiewandlermagnete gegenseitig ab, so dass in der dargestellten Ausgangssituation die zwei äußeren Energiewandlermagnete 32.1 und 32.3 jeweils am linken und rechten Anschlag der Führung 36 liegen und der Energiewandlermagnet 32.2 in der Mitte. Wird nun der Kolbenmagnet 22 von seiner in Fig. 5 dargestellten linken Endstellung nach rechts bewegt, wird zunächst der Energiewandlermagnet 32.1 mitgenommen, soweit dies die Abstoßung zu dem benachbarten Energiewandlermagnet 32.2 zulässt. In dieser Phase wird also bereits eine Spannung aufgrund der Bewegung des Energiewandlermagneten 23.1 induziert. Bei weiterer Bewegung des Kolbenmagneten 22 nach rechts wird der Energiewandlermagnet 32.1 sich nicht weiter nach rechts bewegen und zusätzlich gerät der Energiewandlermagnet 32.2 in den Wirkungsbereich des Kolbenmagneten 22 und erfährt eine entsprechende Kraft und damit Auslenkung von seiner Mittelposition. Ähnliches wie für den ersten Energiewandlermagneten 32.1 gilt für den dritten Energiewandlermagneten 32.3.

Wenn also der Kolbenmagnet 22 an der Spule 34 vollständig vorbeigeführt wird und die Energiewandlermagneten wieder außerhalb des Wirkungsbereichs des Kolbenmagneten 22 sind, wird letztendlich der mittlere Energiewandlermagnet 32.2 eine Schwingungsbewegung ausführen. Damit erfolgt insgesamt eine Reihe von Flussänderungen innerhalb der Spule 34, was zu ausreichenden Spannungsinduktionen zur Energieversorgung führt. Den größten Einfluss dabei hat die Schwingungsbewegung des mittleren Energiewandlermagneten 32.2.

In einer weiteren Ausführungsform der Erfindung kann die Spule 34 als Printspule 44 auf einer Leiterplatte 46 ausgebildet sein. In Fig. 6a ist ein schematischer Querschnitt dargestellt und in Fig. 6b eine Draufsicht. Die Leiterplatte 46 ist mehrlagig ausgebildet, wobei Leiterbahnen auf einer oberen Lage 46.1 und damit verbundene Leiterbahnen auf einer unteren Lage 46.3 die Printspule 44 bilden. Zwischen den beiden Lagen 46.1 und 46.3 ist ein die Führung 36 bildender Hohlraum gebildet, in dem der Energiewandlermagnet 32 linear verschiebbar angeordnet ist. Der die Führung 36 bildende Hohlraum ist zu seinen Seiten hin durch eine Zwischenlage 46.2 begrenzt. Eine derartige Ausbildung der Spule mit Energiewandlermagnet kann kostengünstig hergestellt werden und als sehr kompakte Einheit Bauraum sparen.

Allen Ausführungsformen ist gemein, dass eine nicht dargestellte Energiespeichereinheit vorgesehen ist zur Zwischenspeicherung der von der Energieversorgungseinheit erzeugten Energie. Damit steht zu Zeitpunkten Energie zur Verfügung, in denen die Energieversorgungseinheit selbst keine Energie erzeugt, so dass einzelne Energie- bzw. Spannungsimpulse zwischengespeichert werden können, um einen kontinuierlichen Betrieb der Auswerteeinheit über einen zum Senden der Signale notwendigen Zeitraum zu gewährleisten.

Da es in einfachen Anwendungen häufig vorkommt, dass ein Kolbenpositionssignal nur nach Bewegung eines Kolbens notwendig ist, kann in einer Ausführungsform der Erfindung das Kolbenpositionssignal ausgelöst werden, wenn die Energieversorgungseinheit aktiv ist, wenn also eine Wirkung des Energiewandlermagneten auf die Spule durch die Bewegung des Kolbens erfolgt. In einem solchen Fall könnte das Sensorelement 24 entfallen und der Sensor 20 insgesamt noch kostengünstiger ausgestaltet werden. Allerdings wäre es dann notwendig, den Sensor 20 korrekt an dem Arbeitszylinder zu positionieren, damit ein Schaltsignal bei der gewünschten Kolbenposition auftritt.

Da es in vielen Anwendungen häufig vorkommt, dass nur eine Kolbenposition zu erfassen oder nur eine Vorbeibewegung des Kolbens an dem Sensor zu detektieren ist, kann in einer Ausführungsform der Erfindung das Kolbenpositionssignal ausgelöst werden, wenn die Energieversorgungseinheit aktiv geworden ist, wenn also eine Spannung in der Spule 34 durch den Energiewandlermagneten 32 induziert wurde. In einem solchen Fall könnte das Sensorelement 24 entfallen und der Sensor 20 insgesamt noch kostengünstiger ausgestaltet werden. Allerdings wäre es dann notwendig, den Sensor 20 korrekt an dem Arbeitszylinder zu positionieren, damit ein Schaltsignal bei der gewünschten Kolbenposition auftritt.

Da der erfindungsgemäße Sensor 20 vollständig kabellos arbeitet, kann ein Gehäuse des Sensors hermetisch dicht ausgestaltet werden. Er könnte sogar vollständig, mit Ausnahme einer Antenne, in einen Pneumatik- oder Hydraulikzylinder integriert werden.

## Patentansprüche

1. Magnetischer oder induktiver Sensor (20) zur Erfassung einer Kolbenposition entlang eines Hubwegs eines Kolbens (12) eines Arbeitszylinders (10), wobei der Kolben einen als Dauermagneten ausgebildeten Kolbenmagneten (22) trägt, mit einer elektronischen Auswerteeinheit (26), mit der die Kolbenposition erfassbar ist und die ein die Kolbenposition repräsentierendes Signal abgeben kann und mit einer Energieversorgungseinheit (28) zur Energieversorgung der Auswerteeinheit (26), wobei das Signal drahtlos von dem Sensor an eine übergeordnete Steuerung oder an andere Sensoren übertragbar ist, **dadurch gekennzeichnet, dass** die Energieversorgungseinheit (28) wenigstens eine Spule (34) und wenigstens einen in Wirkverbindung mit der Spule (34) stehenden, durch die magnetische Kopplung mit dem Kolbenmagneten innerhalb der Spule (34) linear verschiebbaren und als Dauermagneten ausgebildeten Energiewandlermagneten (32) aufweist.

2. Sensor nach einem der vorhergehenden Ansprüche, **dadurch gekennzeichnet, dass** die Polrichtung des Kolbenmagneten in Längsrichtung des Hubweges liegt und antiparallel zur Polrichtung des Energiewandlermagneten.

3. Sensor nach einem der vorhergehenden Ansprüche 1 oder 2, **dadurch gekennzeichnet, dass** die Polrichtung des Kolbenmagneten in Längsrichtung des Hubweges liegt und parallel zur Polrichtung des Energiewandlermagneten.

4. Sensor nach einem der vorhergehenden Ansprüche, **dadurch gekennzeichnet, dass** mehrere, insbesondere drei, Energiewandlermagnete innerhalb der Spule vorgesehen sind.

5. Sensor nach Anspruch 4, **dadurch gekennzeichnet, dass** die Polrichtungen jeweils benachbarter Energiewandlermagnete antiparallel sind.

6. Sensor nach einem der vorhergehenden Ansprüche, **dadurch gekennzeichnet, dass** die Spule als Printspule auf einer Leiterplatte ausgebildet ist und der Energiewandlermagnet innerhalb oder zwischen zwei Lagen der Leiterplatte vorgesehen ist.

7. Sensor nach einem der vorhergehenden Ansprüche, **dadurch gekennzeichnet, dass** eine Energiespeichereinheit vorgesehen ist zur Zwischenspeicherung der von der Energieversorgungseinheit erzeugten Energie.

8. Sensor nach einem der vorhergehenden Ansprüche, **dadurch gekennzeichnet, dass** die Wirkung des Energiewandlermagneten auf die Spule als Auslöser für das Signal genutzt wird.

9. Sensor nach einem der vorhergehenden Ansprüche, **gekennzeichnet durch** ein hermetisch dichtes Gehäuse.

10. Verwendung eines Sensors nach einem der vorhergehenden Ansprüche zur Integration in einen Pneumatik- oder Hydraulikzylinder.

## Claims

1. Magnetic or inductive sensor (20) for detecting a position of a piston (12) along a stroke path of the piston of a working cylinder (10), wherein the piston carries a piston magnet (22) constructed as a permanent magnet, with an electronic evaluation unit (26), with which the position of the piston can be detected and which can deliver a signal representing the position of the piston, and with a power supply unit (28) for supplying energy to the evaluation unit (26), the signal is wirelessly transmitted from the sensor to a master controller or to other sensors, **characterized in that** the power supply unit (28) comprises at least one coil (34) and at least one energy conversion magnet (32) which is functionally coupled to the coil (34) and which is linearly movable inside the coil (34) through the magnetic coupling with the piston magnet (20) and which is constructed as a permanent magnet.

2. Sensor according to one of the preceding claims, **characterized in that** the pole direction of the piston magnet is located in the longitudinal direction of the stroke path and antiparallel to the polar direction of the energy conversion magnet.

3. Sensor according to one of the preceding claims 1 or 2, **characterized in that** the pole direction of the piston magnet is located in the longitudinal direction of the stroke path and parallel to the polar direction of the energy conversion magnet.

4. Sensor according to one of the preceding claims, **characterized in that** several, in particular three, energy conversion magnets are provided within the coil.

5. Sensor according to claim 4, **characterized in that** the pole directions of adjacent energy conversion magnets are antiparallel.

6. Sensor according to one of the preceding claims, **characterized in that** the coil is formed as a printed coil on a printed circuit board and the energy conversion magnet is provided within or between two layers of the printed circuit board.

7. Sensor according to one of the preceding claims, **characterized in that** an energy storage unit is provided for intermediate storage of the generated energy from the power supply unit.

8. Sensor according to one of the preceding claims, **characterized in that** the effect of the energy conversion magnet on the coil is used as the trigger for the signal.

9. Sensor according to one of the preceding claims, **characterized by** a hermetically sealed housing.

10. Use of a sensor according to any one of the preceding claims for the integration into a pneumatic or hydraulic cylinder.

## Revendications

1. Capteur magnétique ou inductif (20) destiné à détecter une position d'un piston (12) le long d'un trajet de la course du piston d'un cylindre de travail (10), dans lequel le piston porte un aimant de piston (22) réalisé sous la forme d'un aimant permanent, avec une unité d'évaluation électronique (26), avec laquelle la position du piston peut être détecté et qui peut délivrer un signal représentatif de la position du piston, et avec une unité d'alimentation (28) pour fournir de l'énergie à l'unité d'évaluation (26), le signal est transmis sans fil à partir du capteur à une unité de commande maître ou d'autres capteurs, **caractérisé en ce que** l'unité d'alimentation (28) comprend au moins une bobine (34) et au moins un aimant de conversion d'énergie (32) qui est fonctionnellement couplé à la bobine (34) et qui est mobile de façon linéaire à l'intérieur de la bobine (34) par le couplage magnétique avec l'aimant de piston (20) et qui est réalisé sous la forme d'un aimant permanent.

2. Capteur selon l'une quelconque des revendications précédentes, **caractérisé en ce que** la direction polaire de l'aimant de piston se trouve dans la direction longitudinale de la voie de course et antiparallèle à la direction polaire de l'aimant de conversion d'énergie.

3. Capteur selon l'une quelconque des revendications précédentes 1 ou 2, **caractérisé en ce que** la direction polaire de l'aimant de piston se trouve dans la direction longitudinale de la voie de course et parallèle à la direction polaire de l'aimant de conversion d'énergie.

4. Capteur selon l'une quelconque des revendications précédentes, **caractérisé en ce que** plusieurs, en particulier trois, aimants de conversion d'énergie sont prévus à l'intérieur de la bobine.

5. Capteur selon la revendication 4, **caractérisé en ce que** les directions des pôles des aimants de conversion d'énergie adjacents sont antiparallèles.

6. Capteur selon l'une quelconque des revendications précédentes, **caractérisé en ce que** la bobine est réalisée sous la forme d'une bobine imprimée sur une carte de circuit imprimé et l'aimant de conversion d'énergie est prévu à l'intérieur ou entre deux couches de la carte de circuit imprimé.

7. Capteur selon l'une quelconque des revendications précédentes, **caractérisé en ce qu'**une unité de stockage d'énergie est prévu pour le stockage intermédiaire de l'énergie produite à partir de l'unité d'alimentation.

8. Capteur selon l'une quelconque des revendications précédentes, **caractérisé en ce que** l'effet de la conversion de l'énergie magnétique de la bobine est utilisée pour déclencher le signal.

9. Capteur selon l'une quelconque des revendications précédentes, **caractérisé par** un boîtier hermétiquement scellé.

10. Utilisation d'un capteur selon l'une quelconque des revendications précédentes pour l'intégration dans un cylindre pneumatique ou hydraulique.
